# EUROPEAN PATENT APPLICATION

(11) **EP 4 614 886 A1**
(43) Date of publication of application: **10.09.2025**
(21) Application number: 24170691.0
(22) Date of filing: 17.04.2024
(51) Int. Cl.: H04L 12/40

(54) **METHOD OF OPERATION OF A COMMUNICATION BUS SYSTEM**

(30) Priority: 05.03.2024 PL 44792824
(71) Applicant: Akademia Gorniczo-Hutnicza im. Stanislawa Staszica w Krakowie, 30-059 Krakow (PL)
(72) Inventor: Sornek, Krzysztof, 31-625 Kraków (PL); Wieczorek, Blazej, 44-251 Rybnik (PL); Mucha, Marcin, 32-075 Golcza (PL); Praski, Mateusz, 40-486 Katowice (PL); Plaza, Iwo, 44-194 Knurów (PL); Gajda, Jakub, 38-243 Harklowa (PL); Balcerzak, Hubert, 62-060 Steszew (PL)
(74) Representative: Rybarczyk, Dariusz Pawel

(57) **Abstract**

The invention relates to a method of operation of a communication bus system, in which to the communication bus, via connection nodes, at least one master device MASTER managing data exchange in the bus is connected and one or more slave devices SLAVE are connectable, wherein the method is characterized in that it comprises an initialization phase, in which using the master device MASTER addresses belonging to a previously defined address pool are successively queried, slave devices SLAVE with addresses from the mentioned address pool and connected to the communication bus are registered, and information about the registered slave devices SLAVE is stored in a slave device database (24) of the master device MASTER; wherein each registered slave device SLAVE is individually assigned at least one global label, which is an address to a specific shared memory space of the master device MASTER. The method furthermore comprises a normal operation phase, in which the slave devices SLAVE connected to the bus and registered in the initialization phase communicate via the communication bus under the control of the master device MASTER based on the information about registered slave devices SLAVE in the slave device database (24) obtained in the initialization phase, using the global labels assigned to variables.

## Description

The present invention relates to a method of operation of a unified communication bus for exchanging and collecting data, especially in an unmanned aircraft. The unified communication bus solution of this application can be used in the broadly understood field related to control and data exchange systems in systems operating in industrial environments, vehicle automation areas and in military applications.

Currently available technical solutions include communication buses based on physical implementations based on the RS485/RS232 or CAN standard. An example of an existing solution is described in patent application CN111294266A entitled: "Unmanned aerial vehicle communication method and bus communication system thereof", which concerns a bus implementing the 1553B protocol. An unmanned aircraft flight controller was used as the main bus controller. Further to the controller and monitor, 31 slave devices in the MIL-STD-1553B architecture can be connected to the bus.

According to the publication of Wei Huang, Zhong Wang, and Xin Wang, "Brief Introduction of 1553B Bus Technology and Its Application", AER-Advances in Engineering Research vol 118, 2017, the mentioned standard is used in military applications and on-board data handling subsystems of spacecraft. The transmission speed is 1 Mb/s and allows for reliable transmission of control requests and status messages between connected devices.

The second example of a similar solution is a bus for controlling slave devices in an unmanned aerial vehicle based on the CAN bus standard, disclosed in patent application CN107037724A entitled "UAV (unmanned aerial vehicle) redundant system based on CAN bus". The system comprises a CAN physical layer, a CAN protocol layer and a redundant copy enabling control of slave devices. Switching between the main and backup systems is performed by changing a bit flag in the CAN protocol layer. This solution improves the reliability of the system, which is crucial because its failure may lead to loss of control and steerability of the unmanned aircraft. This solution has a predetermined scheme of slave devices controlled by the flight controller, which is the most important element of the bus. Communication has been divided separately for sensors such as GPS and position sensor and separately for executive systems such as motor controllers.

Currently available solutions based on the RS485 bus do not provide the possibility of connecting slave devices without changing the software of the master device. The purpose of the present invention is to develop a solution that solves the above-mentioned technical problem.

According to the invention, a method of operation of a communication bus system is provided, in which to the communication bus, via connection nodes, at least one master device MASTER managing data exchange in the bus is connected and one or more slave devices SLAVE are connectable, wherein the method comprises an initialization phase, in which using the master device MASTER addresses belonging to a previously defined address pool are successively queried, slave devices SLAVE with addresses from the mentioned address pool and connected to the communication bus are registered, and information about the registered slave devices SLAVE is stored in a slave device database of the master device MASTER; wherein each registered slave device SLAVE is individually assigned at least one global label, which is an address to a specific shared memory space of the master device MASTER. The method furthermore comprises a normal operation phase, in which the slave devices SLAVE connected to the bus and registered in the initialization phase communicate via the communication bus under the control of the master device MASTER based on the information about registered slave devices SLAVE in the slave device database obtained in the initialization phase, using the global labels assigned to variables.

In a preferred embodiment of the invention, the global labels are assigned and managed by a central server connected to the master device MASTER via a mobile application of a mobile device connected to the master device MASTER via Bluetooth.

In a preferred embodiment of the invention, the allocation of the global labels is broadcast cyclically to slave devices SLAVE with frequencies set for the address ranges.

In a preferred embodiment of the invention, 8-bit or 16-bit labels are used as global labels.

In a preferred embodiment of the invention, the global labels have a priority structure, according to which the priority of handling data on the bus by the master device MASTER is higher, the lower the value of the label assigned to this data.

The labels are, for example, in numerical form and are addresses to the memory shared between the slave devices. It is typically located in the master device MASTER and is periodically broadcast to the slave devices with frequencies set for the address ranges.

The numerical range for labels is, for example, a value of 8 or 16 bits, to be encoded depending on needs, required for communication between devices within the bus or for specifying what data is provided by the implemented slave device (also referred to as a peripheral device), e.g., data from sensors, internal state of the device, etc.

As part of the implemented process, it is determined how many bytes are needed to encode the information (how many labels/addresses/bytes should be reserved), and the frequency with which the data is to be sent to the rest of the devices is determined (selecting the appropriate range of the address pool, permanently coded assignment to specific transfer intervals depending on the criticality and need for data freshness), and determined labels are reserved (each label is an address to a byte in the shared memory of the master device MASTER) in such a way that there are no collisions between the use of addresses by various peripheral devices and that each peripheral device understands the data received from the rest of peripheral devices.

The device managing the entire process may be the master device MASTER, but it is also possible to use a central server in the network that provides both label registration and access via REST API via a mobile application that, connected via Bluetooth to the master device MASTER, displays data in memory enriched with their meaning and purpose downloaded from the server.

The master device MASTER does not need to know which labels from the address pool will be used and for what purpose. Determining the function and occupation of labels can be implemented in any way desired by peripheral device developers. This can be agreed upon contractually, it can be registered by the system and allocated automatically. The condition is that each peripheral device connected to one master device MASTER interprets the same label in the same way.

The invention stands out from the state of the art by the system of assigning global labels to variables. The master device designed in the solution according to the invention controls bus communication using information obtained from slave devices during the bus initialization phase (searching for slave devices in the address pool, collecting information on shared data and configuration variables).

The solution according to the invention uses labeling systems for variables sent via the bus, so that the central bus controller does not need to have information about the connected devices, and important data is issued to the bus based on the information presented during the initialization phase. Thanks to this system, it is possible to change the configuration of slave devices without changes in the bus controller. An additional aspect related to the use of global labels for variables is the priority system based on variable labels. The lower the label value, the higher priority of the variable. Each of the slave devices may occupy several label ranges for variables of different priority. This solution allows the use of a central bus controller to manage the bus operation, which means there is no risk of conflicts during transmission, while providing similar functional properties to buses using P2P technology (e.g. CAN BUS). In many available designs, the main bus controller is the flight controller, in the presented solution the flight controller is a slave device.

The provided system enables to connect many slave devices without the need to introduce changes in the software of the central bus controller (master), which makes this solution fit into the concept of scalability of technical projects. Connecting additional devices allows to expand the capabilities of the operating system (technical device in general), which is particularly important when designing and building prototypes of technical devices. This feature does not exclude the use of the system in the end device, because the ability to update and add further subsystems is important from the point of view of the user and the equipment distributor. When it is necessary to increase the reliability of communication, a bus variant can be used that includes a redundant controller that takes over the tasks of the main controller in the event of its failure.

The use of this solution in a communication and control system design allows for maximum simplification of the integration of executive (slave) modules created by various teams. This allows for significant acceleration of design and prototyping work and ensures the required scalability of the project. The only limitation on the scale that this system can achieve results from the communication systems used between the bus (RS485 and devices connected to the bus) and the bandwidth limitations of other interfaces used. Moving the database of global labels outside the bus infrastructure allows for correct decoding of received data on devices implementing the user interface (e.g. mobile application). The advantage of this approach to the problem is constant control over the data available in the communication system, which facilitates the construction and modification of existing slave devices. Additionally, the use of the simple and low-cost maintenance RS485 standard increases the chances of the solution being implemented as a dedicated system for the construction of light and non-commercial unmanned aerial vehicles.

The subject of the invention in its embodiments is shown in the drawing in which:
Fig. 1 shows a general diagram of a bus with connected devices;
Fig. 2 shows a block diagram of a connection system of a system for implementing the invention;
Fig. 3 shows a flow diagram of an initialization phase of the method according to the invention;
Figs. 4a and 4b show a flow diagram of a normal operation phase of the method according to the invention.

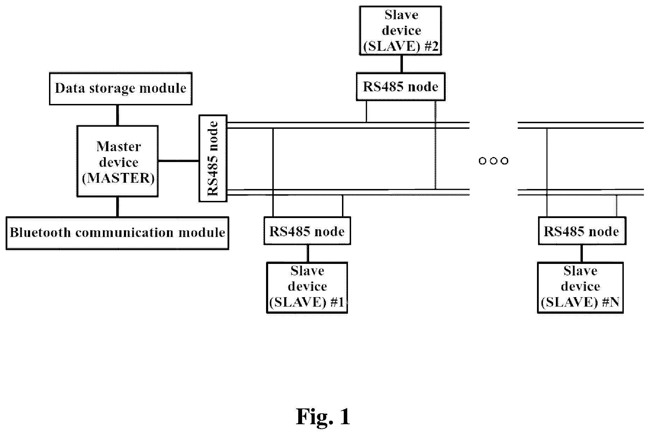

Fig. 1 shows a general diagram of a bus to which, via RS485 connection bridges (nodes), a master device MASTER is connected that constitutes the main (unmodifiable) element managing data exchange in the bus, as well as a number of slave devices SLAVE 1, 2, ..., N, which have the role of devices providing data and that implement their own functionality. The common bus enables free communication between the master device MASTER and each of the slave devices SLAVE using the RS485 standard. The master device MASTER is also connected to data recording modules and Bluetooth communication modules.

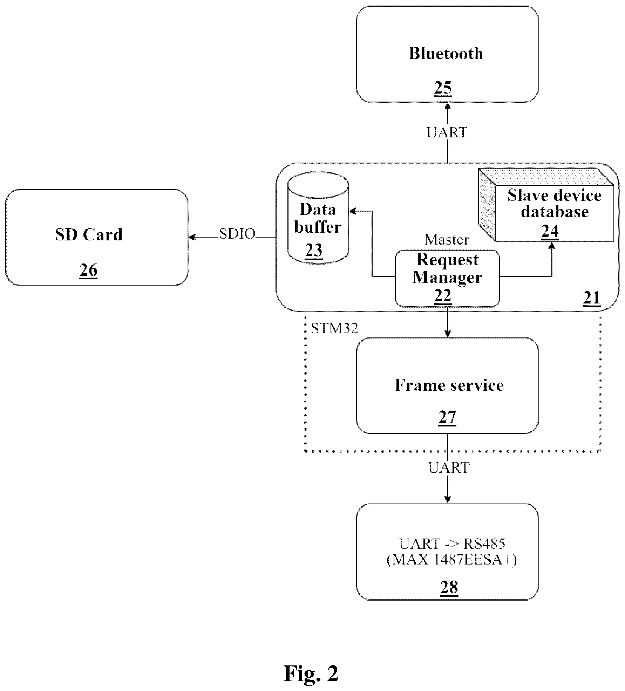

The general communication bus architecture explained above with reference to Fig. 1 has been used as the basis of a system for implementing the present invention, the connection scheme of which is shown in Fig. 2 as a block diagram. In the illustrated embodiment, the above-described bus is used as the main communication bus in the context of a prototype solar-powered unmanned aircraft, but one skilled in the art will appreciate that this is only one possible application and that the presented example does not limit the invention to any particular application.

As shown in Fig. 2, the master device MASTER 21 is implemented based on the STM32 microcontroller and communicates with the above-mentioned Bluetooth communication module 25 and data storage module 26 using UART and SDIO protocols, respectively. The master device MASTER is used to organize and manage the operation of the communication bus. The exchange of data with the communication bus is performer using a request manager 22 and frame service 27. The request manager 22 coordinates communication through special commands sent to the bus, and the frame service 27 is responsible for encoding and decoding raw data transmitted via the bus. A module 28 converts the UART serial port standard to the RS485 bus, thus enabling data transfer from the UART port over the RS485 bus. The software performing the functionality of the master device MASTER operates under the control of the FreeRTOS real-time system.

The logically separated message encoding process Frame service 27 is responsible for encoding and decoding raw data transmitted via the bus. At this stage, data integrity is also checked using CRC code. Separating this process from the rest of the master device MASTER software allows the same code to be used also on slave devices SLAVE. This functionality is shared with the slave devices SLAVE.

The task of the data storage module 26 is to register the activity of slave devices SLAVE in a non-volatile memory (e.g. flash memory), which is practically implemented as a dump of variables with labels from a data buffer 23 to a memory of a SD card 26 (as an exemplary form of the data storage module) using Windows/DOS compatible file system.

The Bluetooth communication module 25 serves as a user interface in cooperation with a mobile application. From the application level, it is possible to view data in real time and send configuration data to slave devices SLAVE. Thanks to the integration of a global label database, the values are displayed along with a user-readable description of the parameter.

The request manager 22 module coordinates communication through special commands sent to the bus, which grant permissions to individual registered slave devices SLAVE to modify variables in the data buffer 23. The registration of slave devices SLAVE takes place automatically during an initialization phase, during which information about the registered devices is stored in a slave device database 24. Broadcasting variable values to the bus with appropriate priorities is also performed here.

The module 28 converts the UART serial port standard to the RS485 bus, thus enabling data transfer from the UART port over the RS485 bus. The module 28 allows to connect slave devices SLAVE capable of supporting the RS485 communication module.

The slave device SLAVE may be any microcontroller or microcomputer (in general, any technical device) with the ability to support the RS485 communication module and clock frequencies sufficient to ensure a sufficiently fast response of the system to a query sent by the central bus controller (adapted to the bus speed). Each of the slave devices can use data transferred over the bus. According to the label priority structure, the central controller queries data in specific ranges, ensuring that data with a lower label value is shared more frequently. When designing a slave device, the label ranges to be occupied by that device should be reserved. The solution can also be used in a mobile robot to provide communication of the central module with executive devices (e.g. motor controllers). The central module can provide information about the set movement parameters of devices in real time and receive data from sensors. In this application, the information prioritization system is particularly important, by means of which information crucial to the operation of the system will be updated with a higher frequency than less important information. Additionally, in this example, a bus variant with increased reliability should be used by adding additional (redundant) controllers that remain in observing mode until an error is detected in the operation of the main controller device.

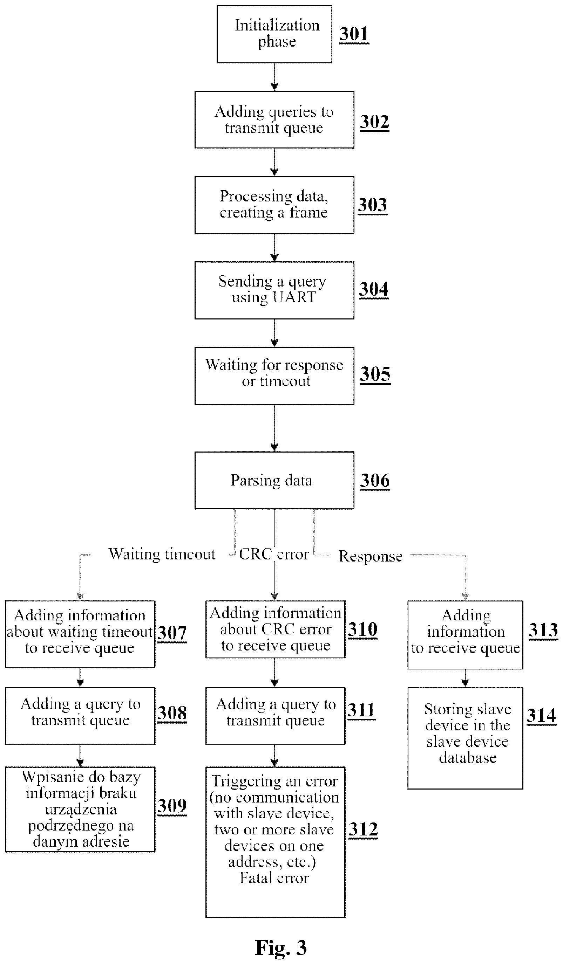

Fig. 3 shows a diagram of an initialization phase of the method according to the invention. The initialization phase starts in step 301, for example after the master device MASTER is powered up or at another predetermined time point. In the next step 302, queries are added to a transmit queue stored in an operational memory of the master device MASTER. Then, in step 303, the message encoding process frame service 27 retrieves data from the queue and creates frames ready to be sent via UART in step 304. In step 305, the request manager 22 waits for feedback from the message encoding process 27 before starting a normal operation work. The message encoding process 27 proceeds to step 306 upon receipt of the return frame or upon reaching the maximum waiting time. In step 306 the data is parsed. If no response frame has been received by the maximum wait time (step 307), the query is repeated (step 308). If there is no further response, it is assumed that there is no slave device at the given address, and the suitable information is entered into the slave device database 24 (step 309). If a corrupted frame is received, as determined based on the mismatched CRC (step 310), the message encoding process 27 resends the query frame by adding it into the transmit queue (step 311). If the error persists, a fatal error is triggered and the master device MASTER terminates the operation (step 312). If data parsing is successful, then in step 313 the feedback information is added to the receive queue stored in the operational memory of the master device MASTER. Step 314 begins with waking up the management module 22 due to the appearance of a new message in the receive queue, which creates an entry for a new device SLAVE in the slave device database 24 (step 314). As a result of the initialization phase, all slave devices SLAVE connected to the bus are detected within the entire address pool, and the relevant information about the detected devices is stored in the slave device database 24 for use in a normal operation phase described in more detail below.

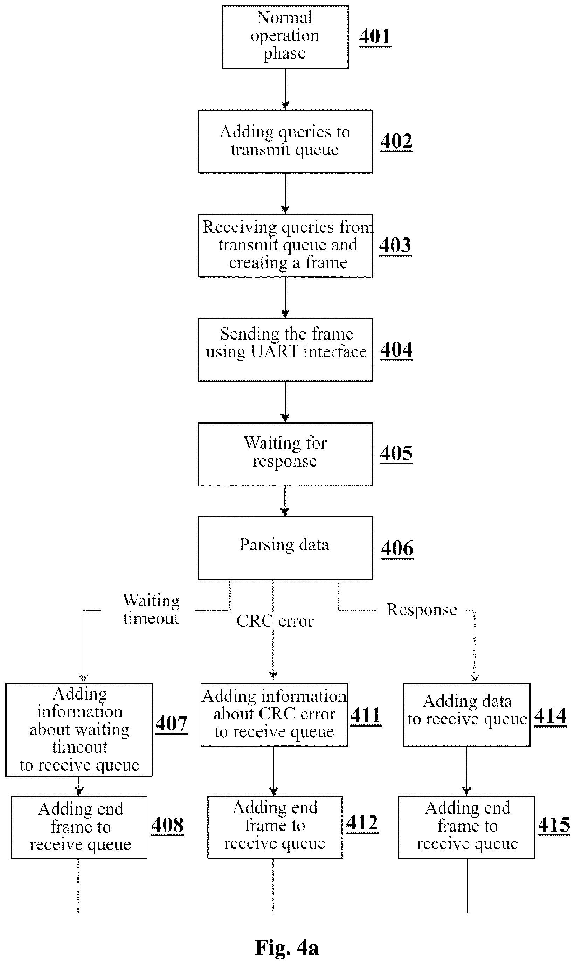

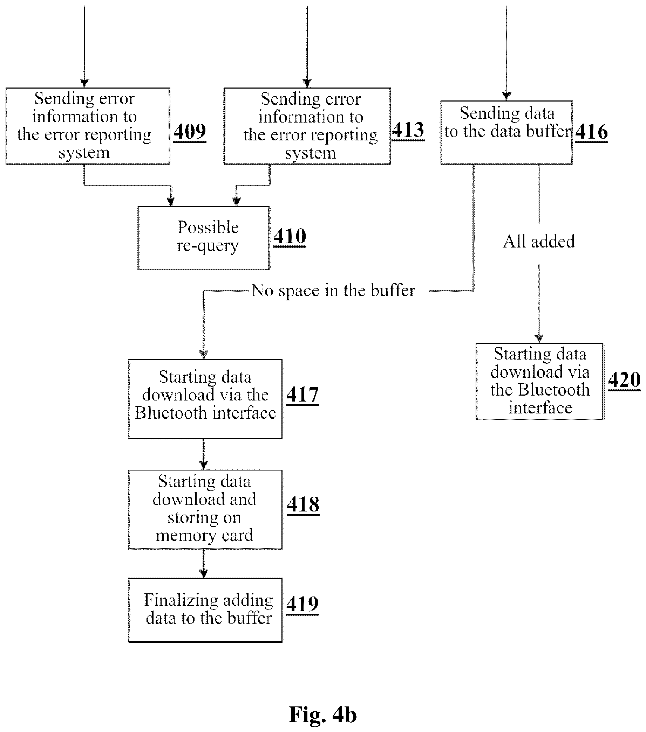

Figs. 4a and 4b show a flow diagram of a normal operation phase of the method according to the invention. The normal operation phase begins in step 401, after which, in step 402, queries are added to the transmit queue stored in the operational memory of the master device MASTER by the request manager 22 management module. Then, in step 403, the message encoding process frame service 27 retrieves data from the queue and creates frames ready to be sent via UART in step 404. After sending the frame, the message encoding process 27 waits for feedback on the bus. The message encoding process 27 proceeds to step 406 upon receipt of the return frame or upon reaching the maximum waiting time. In step 406 the data is parsed. If no response frame has been received by the maximum waiting time, in step 407 the message encoding process 27 adds timeout information to the receive queue stored in the operational memory of the master device MASTER. In step 408, an end frame is also added to the same queue to indicate that the addressed slave device SLAVE has finished transmitting commands. In step 409, the request manager 22 management module retrieves error information from the receive queue and records the error in the operational memory of the master device MASTER. Step 410 symbolizes the re-query of this slave device SLAVE in the next cycle of the normal operation phase. If a corrupted frame is received during step 406, as determined by the mismatched CRC, the message encoding process 27 proceeds to step 411 and adds the CRC error information to the receive queue stored in the operational memory of the master device MASTER. In step 412, an end frame is also added to the same queue to indicate that the addressed slave device SLAVE has finished transmitting commands. In step 413, the request manager 22 management module retrieves error information from the receive queue and records the error in the operational memory of the master device MASTER. If data parsing (step 406) is successful, the message type is checked. If the addressed slave device SLAVE has sent a value and a label whose value is to be replaced, in step 414 the frame is added to the receive queue stored in the operational memory of the master device MASTER, and the message encoding process 27 returns to step 405. If a message indicating the end of transmission is received, an end frame is added to the same queue in step 415 to indicate that the addressed slave device SLAVE has finished transmitting commands. In step 416, the request manager 22 retrieves data from the receive queue and transmits it to the data buffer 23. If there is not enough space in the data buffer to record the status update, the Bluetooth communication module 25 triggers data transfer to the connected mobile device in step 417. In step 418, the data storage module 26 writes the state updates to a permanent memory. In step 419, recording of labels and new values in the data buffer 23 is continued. In the last step of the normal operation phase cycle, i.e. step 420, the Bluetooth communication module sends, to the mobile application of the connected mobile device, status updates which have not been sent yet.

## Claims

1. A method of operation of a communication bus system, in which to the communication bus, via connection nodes, at least one master device MASTER managing data exchange in the bus is connected and one or more slave devices SLAVE are connectable, **characterized in that** the method comprises:
- an initialization phase, in which using the master device MASTER addresses belonging to a previously defined address pool are successively queried, slave devices SLAVE with addresses from the mentioned address pool and connected to the communication bus are registered, and information about the registered slave devices SLAVE is stored in a slave device database (24) of the master device MASTER;
wherein each registered slave device SLAVE is individually assigned at least one global label, which is an address to a specific shared memory space of the master device MASTER,
and
- a normal operation phase, in which the slave devices SLAVE connected to the bus and registered in the initialization phase communicate via the communication bus under the control of the master device MASTER based on the information about registered slave devices SLAVE in the slave device database (24) obtained in the initialization phase, using the global labels assigned to variables.

2. The method according to claim 1, **characterized in that** the global labels are assigned and managed by a central server connected to the master device MASTER via a mobile application of a mobile device connected to the master device MASTER via Bluetooth.

3. The method according to claim 1 or 2, **characterized in that** the allocation of the global labels is broadcast cyclically to slave devices SLAVE with frequencies set for the address ranges.

4. The method according to one of claims 1-3, **characterized in that** 8-bit or 16-bit labels are used as global labels.

5. The method according to one of claims 1-4, **characterized in that** the global labels have a priority structure, according to which the priority of handling data on the bus by the master device MASTER is higher, the lower the value of the label assigned to this data.
